# EUROPEAN PATENT APPLICATION

(11) **EP 1 743 926 A2**
(43) Date of publication of application: **17.01.2007**
(21) Application number: 06013887.2
(22) Date of filing: 05.07.2006
(51) Int. Cl.: C09J 5/02

(54) **Bonding method**

(30) Priority: 12.07.2005 JP 2005203500
(71) Applicant: Nippon Sheet Glass Company, Limited, Tokyo 105-8552 (JP)
(72) Inventor: Ueda, Makoto, Minato-ku Tokyo, 105-8552 (JP); Terada, Akiyoshi, Minato-ku Tokyo, 105-8552 (JP); Kanatani, Yasukazu, Minato-ku Tokyo, 105-8552 (JP)
(74) Representative: Kohler Schmid Möbus

(57) **Abstract**

A bonding method that enables adhesive protruding out from a joint to be removed easily. A primer 14 is applied onto a part of a region 13a of a joint 13 between a glass plate 11 and a molding 12. An adhesive 15 for which adhesion is realized through the primer 14 is applied such as to fill the joint 13 with the adhesive 15.

## Description

### BACKGROUND OF THE INVENTION

### Field of the Invention

The present invention relates to a bonding method, and in particular relates to a bonding method using an adhesive for which adhesion is realized through a primer.

### Description of the Related Art

There has hitherto been proposed an apparatus that enables excess adhesive protruding out from a joint of a bonded member such as an outside angle pillar formed by bonding a plurality of substrates together at predetermined angles using an adhesive to be reliably removed in a short time (see, for example, Japanese Laid-open Patent Publication (Kokai) No. 2000-135660).

However, when attempting to pull off the adhesive protruding out from such a joint between a joined body and the adherend, if the adhesive protruding out from the joint is firmly bonded to the adherend, then the adhesive protruding out from the joint cannot be removed easily, but rather a stripping member such as a razor must be used for stripping off the adhesive firmly bonded to the adherend, and hence the adherend may be damaged.

Moreover, when attempting to pull off the adhesive bonded to the adherend, the shearing point varies in accordance with variations in the thickness of the adhesive, the state of stretching, and the adhesive strength, and hence the parting portion of the adherend may take on a meandering shape, damaging the appearance.

If the adhesive is thus applied on such as to not protrude out from the joint between the joined body and the adherend, then it is not possible to verify that the joint between the joined body and the adherend has been filled by the adhesive, which may result in defective adhesion.

### SUMMARY OF THE INVENTION

It is an object of the present invention to provide a bonding method that enables adhesive protruding out from a joint to be removed easily.

To attain the above object, according to the present invention, there is provided a bonding method comprising a primer application step of applying a primer onto a part of a region of a joint between a joined body and an adherend, and an adhesive application step of applying an adhesive for which adhesion is realized through the primer such as to fill the joint with the adhesive.

According to the present invention, a primer is applied onto a part of a region of the joint between the joined body and the adherend, and then an adhesive for which adhesion is realized through the primer is applied such as to fill the joint with the adhesive. As a result, adhesive protruding out from the joint can be removed easily.

Preferably, the bonding method further has an adhesive thinning step of reducing a thickness of the applied adhesive at a parting portion of the adherend before the adhesive hardens.

According to the present invention, the thickness of the applied adhesive is reduced at a parting portion of the adherend before the adhesive hardens. As a result, a good appearance at the parting portion of the adherend can be maintained, and moreover working ability is improved (working becomes easier), and hence the adhesive protruding out from the joint can be removed easily.

More preferably, the adhesive thinning step comprises a parting line formation step of forming a parting line in the applied adhesive.

According to the present invention, a parting line is formed in the applied adhesive. As a result, the thickness of the adhesive can be reduced easily at the parting portion of the adherend.

Also more preferably, the bonding method further has a tape affixing step of affixing tape to a portion where the adhesive is to be applied away from the joint before the primer is applied onto the part of the region of the joint.

According to the present invention, tape is affixed to a portion where the adhesive is to be applied away from the joint before the primer is applied onto the part of the region of the joint. As a result, the adhesive protruding out from the joint can be prevented from sticking to the adherend; by pulling off the affixed tape, the adhesive protruding out from the joint can be removed more easily.

Alternatively, preferably, the bonding method further has a tape affixing step of affixing tape to a portion where the adhesive is to be applied away from the joint after the primer has been applied onto the part of the region of the joint but before the adhesive is applied.

According to the present invention, tape is affixed to a portion where the adhesive is to be applied away from the joint after the primer has been applied onto the part of the region of the joint but before the adhesive is applied. As a result, the adhesive protruding out from the joint can be prevented from sticking to the adherend; by pulling off the affixed tape, the adhesive protruding out from the joint can be removed more easily.

The above and other objects, features, and advantages of the invention will become more apparent from the following detailed description taken in conjunction with the accompanying drawings.

### BRIEF DESCRIPTION OF THE DRAWINGS

FIG. 1 is a sectional view schematically showing the construction of a glass member subjected to a bonding method according to an embodiment of the present invention.

FIG. 2 is a flowchart showing the bonding method according to an embodiment of the present invention.

FIG. 3 is a sectional view schematically showing the construction of a variation of the glass member shown in FIG. 1.

### DETAILED DESCRIPTION OF THE PREFERRED EMBODIMENTS

The present inventors carried out assiduous research to attain the above object, and as a result discovered that if a primer is applied onto a part of a region of a joint between a joined body and an adherend, and then an adhesive for which adhesion is realized through the primer is applied such as to fill the joint with the adhesive, then adhesive protruding out from the joint can be removed easily.

Moreover, the present inventors discovered that it is preferable to reduce the thickness of the applied adhesive at a parting portion of the adherend before the adhesive hardens, since then a good appearance at the parting portion of the adherend can be maintained.

Moreover, the present inventors discovered that it is preferable to form at least one parting line in the applied adhesive, since then the thickness of the adhesive at the parting portion of the adherend can be reduced easily.

Furthermore, the present inventors discovered that it is preferable to affix tape to a portion where the adhesive is to be applied away from the joint, since then adhesive protruding out from the joint can be prevented from sticking to the adherend; by pulling off the affixed tape, the adhesive protruding out from the joint can be removed more easily.

The present invention was accomplished based on the above research results.

The present invention will now be described in detail with reference to the drawings showing preferred embodiments thereof.

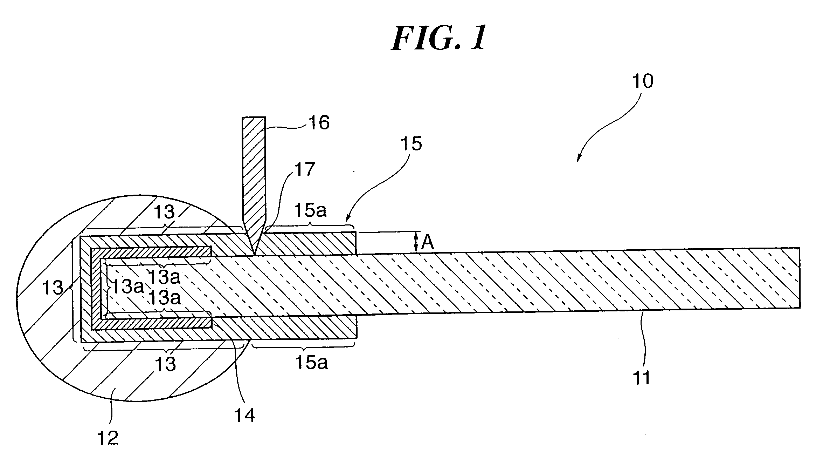

FIG. 1 is a sectional view schematically showing the construction of a glass member subjected to a bonding method according to an embodiment of the present invention.

As shown in FIG. 1, the glass member 10 comprises a glass plate 11 (adherend), and a molding 12 (joined body) bonded to the glass plate 11 such as to cover an end portion of the glass plate 11. The glass plate 11 and the molding 12 are bonded together by a primer 14 applied to a part of a region 13a of a joint 13 between the glass plate 11 and the molding 12, and a polyurethane adhesive 15 applied into the joint 13. Here, the applied adhesive 15 has a thickness A in a range of 0.5 to 15 mm, preferably 1 to 6 mm, and protrudes out from the joint 13. In the glass member 10, a parting line 17 is formed as a discontinuity in the adhesive 15 by inserting a resin rod 16 having a pointed tip into the adhesive 15. Adhesive 15a protruding out from the joint 13 is removed taking the parting line 17 as a boundary line. In FIG. 1, there is shown only a parting line 17 formed by the resin rod 16 being inserted into the adhesive 15 from above in FIG. 1, but another parting line 17 may similarly be formed by inserting the resin rod 16 into the adhesive 15 from below in FIG. 1.

The bonding method will now be described.

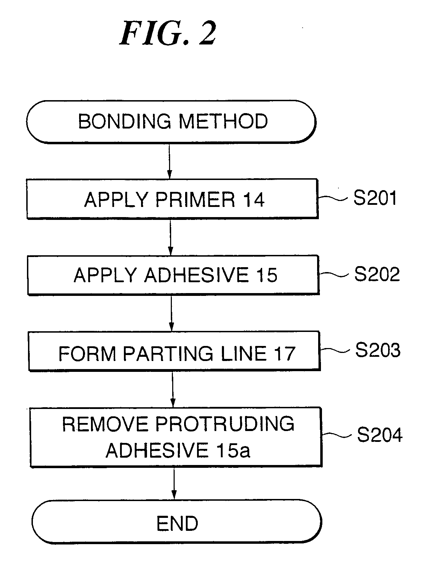

FIG. 2 is a flowchart showing a bonding method according to an embodiment of the present invention.

As shown in FIG. 2, the primer 14 is applied onto the part of the region 13a of the joint 13 between the glass plate 11 and the molding 12 (step S201), the polyurethane adhesive 15 for which adhesion is realized through the primer 14 is applied such as to fill the joint 13 with the adhesive 15 (step S202), and before the applied adhesive 15 hardens, the parting line 17 is formed in the adhesive 15 using the resin rod 16 (step S203) (adhesive thinning step), and then adhesive 15a protruding out from the joint 13 is removed taking the parting line 17 as a boundary (step S204).

Here, regarding the application of the adhesive 15 in step S202, the adhesive 15 may be applied onto the molding 12 before the molding 12 is attached to the glass plate 11, or the adhesive 15 may be injected into the joint 13 after the molding 12 has been attached to the glass plate 11 so as to compression-bond the molding 12 on.

According to the present embodiment, the primer 14 is applied onto the part of the region 13a of the joint 13 between the glass plate 11 and the molding 12 (step S201), and then the polyurethane adhesive 15 for which adhesion is realized through the primer 14 is applied such as to fill the joint 13 with the adhesive 15. As a result, the adhesion force to the glass plate of the adhesive 15a protruding out from the joint 13 can be reduced, and hence the adhesive 15a protruding out from the joint 13 can be removed easily.

Moreover, according to the present embodiment, the parting line 17 is formed in the applied adhesive 15 using the resin rod 16 (step S204) before the applied adhesive 15 hardens. As a result, the adhesive 15 can be deformed easily at a portion thereof at the parting line 17, and hence a good appearance at the parting portion of the glass plate 11 can be maintained.

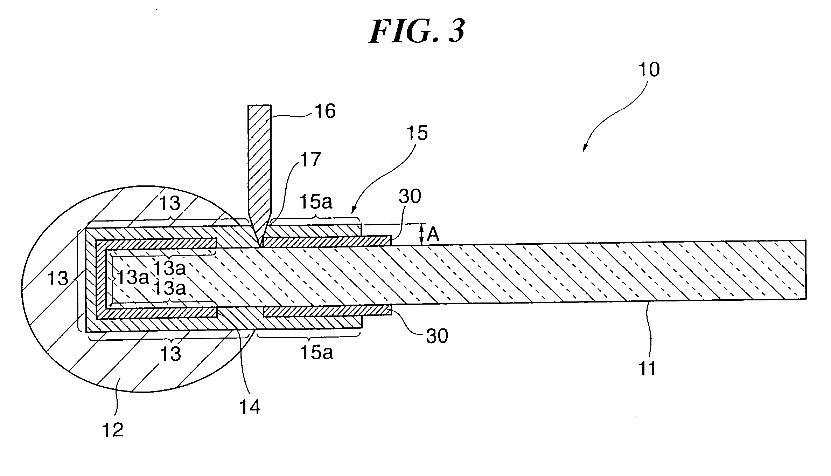

In the present embodiment, the adhesive 15a protruding out from the joint 13 directly contacts the glass plate 11. However, there is no limitation to this, but rather before applying on the adhesive 15, tape 30 (see FIG. 3) may be affixed to a portion of the glass plate 11 where the adhesive 15a that will protrude out from the joint 13 is to be applied. As a result, the adhesive 15a protruding out from the joint 13 can be prevented from sticking to the glass plate 11; by pulling off the affixed tape 30, the adhesive 15a protruding out from the joint 13 can be removed more easily.

In the present embodiment, the thickness A of the adhesive 15 is reduced at the parting portion of the glass plate 11 by forming the parting line 17. However, there is no limitation to this, but rather the thickness A may alternatively be reduced by scraping off the adhesive 15 at the parting portion of the glass plate 11.

In the present embodiment, the resin rod 16 is used for forming the parting line 17. However, there is no limitation to this, but rather anything able to form the parting line 17 may be used, for example a spatula may be used.

In the present embodiment, a molding 12 is used as the joined body. However, there is no limitation to this, for example a weather strip may be used instead.

In the present embodiment, a polyurethane adhesive is used as the adhesive 15. However, there is no limitation to this, but rather a silicone adhesive, a modified silicone adhesive, or an epoxy adhesive may alternatively be used.

## Claims

1. A bonding method comprising:
a primer application step of applying a primer onto a part of a region of a joint between a joined body and an adherend; and
an adhesive application step of applying an adhesive for which adhesion is realized through the primer such as to fill the joint with the adhesive.

2. A bonding method as claimed in claim 1, further having an adhesive thinning step of reducing a thickness of the applied adhesive at a parting portion of the adherend before the adhesive hardens.

3. A bonding method as claimed in claim 2, wherein said adhesive thinning step comprises a parting line formation step of forming a parting line in the applied adhesive.

4. A bonding method as claimed in claim 2, further having a tape affixing step of affixing tape to a portion where the adhesive is to be applied away from the joint before the primer is applied onto the part of the region of the joint.

5. A bonding method as claimed in claim 2, further having a tape affixing step of affixing tape to a portion where the adhesive is to be applied away from the joint after the primer has been applied onto the part of the region of the joint but before the adhesive is applied.
